# EUROPEAN PATENT APPLICATION

(11) **EP 4 331 795 A1**
(43) Date of publication of application: **06.03.2024**
(21) Application number: 22206254.9
(22) Date of filing: 08.11.2022
(51) Int. Cl.: B27N 3/00, C09J 103/02, D21J 1/04

(54) **METHOD FOR THE PRODUCTIO OF WET-FORMED PARTICLEBOARDS BASED ON AN ECOLOGICAL BINDER**

(30) Priority: 02.09.2022 PL 44218822
(71) Applicant: Uniwersytet Przyrodniczy w Poznaniu, 60-637 Poznan (PL)
(72) Inventor: MIRSKI, Radoslaw, 63-100 Srem (PL); WALKIEWICZ, Joanna, 61-166 Poznan (PL); DERKOWSKI, Adam, 62-510 Konin (PL)
(74) Representative: Augustyniak, Magdalena Anna

(57) **Abstract**

A method for the production of wet-formed particleboards based on an ecological binder of pine chips with a known fragmentation structure - fractional composition and dimensional structure, where the chips are subjected to drying to a moisture content prior glue application of no more than 3.5%, most preferably to a moisture content of from 1% - 2%, and an adhesive mixture is applied to prepared in this way chips in the amount from 18% to 25%, wherein the most preferable is when the bonding ratio is 20% - 22%, i.e. the dry matter of glue to the dry matter of wooden chips, and the adhesive mixture is prepared in such a way that from 20 to 40% w/w, preferably 30% w/w of wheat or rye flour, from 7 to 13% w/w, preferably 10% grams of sugar, from 1 to 10%, preferably 5% of apple cider vinegar are added to 50 - 70% w/w (in relation to the volume of the adhesive mixture) of water, preferably 60% of water, and mixed thoroughly for approximately 3 minutes, the adhesive mixture is subjected to the process of homogenization until a homogeneous mixture is obtained, and after the adhesive mixture has been applied to the chips, no later than 60 minutes after the adhesive mixture has been prepared, boards with a density 700 kg/m3 - 900 kg/m3, most preferably with a density 780 kg/m3 - 830 kg/m3 are produced so that the mat is pressed at a unit pressure from 2.5 - 3.5 MPa, but preferably between 2.6 MPa and 2.8 MPa, the temperature of the press hotplates is from 180°C to 240°C, but it is preferable for the temperature to be 200°C - 220°C, a pressing coefficient from 50 s/mm of thickness to 75 s/mm is maintained, but it is preferable for the pressing time to be closer to 60 s/mm, and the press pressure is maintained until a moisture content in the range 1% - 5%, but preferably 3% - 3.5%, is achieved in the pressed mat at the moment of opening of the press shelves.

## Description

The object of the invention is a method for the production of wet-formed particleboards based on an ecological binder.

The recently observed trend of shifting, in various aspects of everyday life, from materials that are difficult to recycle or are non-biodegradable means that new engineering materials with features fitting into the principle of sustainable development are continuously being sought. After Wikipedia: *"The doctrine of sustainable development strives for social justice through, inter alia, the economic and environmental efficiency of projects ensured, inter alia, by an accurate account of production costs, also extending in a very complex manner with respect to external resources (iiSBE).*" Being aware that we can choose ecological materials allows us to make rational decisions and, in turn, allows us to protect ourselves, our loved ones and the environment. However, the availability of these materials is not at all that high. Often directives or our expectations are higher than the availability of these materials due to the currently low technological level for these products. Going back to natural materials is by no means easy, as the industrial revolution has determined a very strong development of technologies based on the processing of coal or oil. Moreover, an efficient industry profiting from number easily competes with inefficient production lines of near-natural materials. The lignocellulosic board material industry, irrespective of the form of a raw material entering the moulding lines (chips, pulp), is an industry that combines both trends - old and new. This is because it uses a natural, renewable material on the one hand and synthetic binding agents on the other. It seems, however, that with the ever-increasing ecological awareness of the public, the public perception of such materials will naturally be decreasing as they lose their features of an ecological material. Therefore, the production of materials based on lignocellulosic raw materials of various origins, including non-wood ones, bonded with ecological agents, intended for the furniture industry is a natural development direction for the board industry. The furniture industry needs a specific product such as a particleboard, as it expects, above all, high mechanical properties, while the physical features of the product, in particular thickness swelling or water absorbability, are less important than in the case of e.g. boards intended for the construction industry.

Natural binders, although known for many years, have not found widespread use in particleboard production. There are several reasons for this: the proposed agents are several times more expensive than synthetic resins, they are characterized by very low concentrations, often below 4%, which makes it difficult not so much its application on the chips so as to complicate the method for the production of the boards, ultimately, they are often not chemically pure agents of natural origin but contain the addition of synthetic resins that improve their properties. During research, it was possible to develop a very simple adhesive and define the technological assumptions that are needed to produce particleboards with characteristics of furniture boards (boards referred to as P2).

At the same time, the industry started to use boards in which sawdust and wood dust are infiltrated with increasingly powerful glues, the composition of which, due to the solvents released, requires additional fire protection and seasoning of the boards. The significant amount of glue also causes an increase in weight, which affects treatment and transport costs.

Such features are provided by the placement of a barrier layer in the structure of the board or on its surface. Such a board is shown in the description of JP2009034898, in which non-combustible or infrared-reflective layers are laminated onto a wooden or wood-based substrate. In this particular case, the recommended layers are layers of a non-combustible board, aluminium foil and a top layer of printed paper.

In contrast, the description of JPH1037346 discloses a non-combustible composite based on plant material, in which heat-resistant layers laminated onto the surface of the wood core are also used.

Sometimes boards are also modified to protect them from moisture. In the description of JPH09221832, the surface of a wood-based board is covered with aluminium foil, gluing it to the surface, while the opposite plane is covered with a synthetic resin that makes it resistant to moisture.

Wooden and wood-based boards of sandwich construction are also known, in which successive layers of wood laminate/composite are laid and glued together by arranging the grain in perpendicular directions. As a result, the effects of wood warping due to changes in moisture content can be negated.

A beam is known from the description of EP1260648, in the structure of which reinforcing bars are inserted, and which is made so that at least one plank or board is milled to obtain at least one longitudinal groove, into which the binder - cement - is subsequently poured and the reinforcing bar is subsequently inserted.

A beam is also known from PL224876, in the structure of which synthetic reinforcements located between the layers of the beam are inserted.

A beam is also known from Polish utility model 63838, which in the tensile layer has cavities with inserted spiral reinforcing rods.

The document EP1581705 is also known that discloses reinforcement inserted between laminate's layers, which reinforces the beam in the tensile zone.

For applications in interiors with a constantly low moisture content, as is now common in air-conditioned or recuperated spaces, there is no need for an application of expensive, moisture-resistant binders that are highly difficult to recycle.

Wet-formed particleboards produced based on an ecological binder, produced according to the method of the invention, intended for use in dry conditions, produced as wet-formed with a mat moisture content exceeding 20%, made of wooden chips bonded with an adhesive agent produced on the basis of flour, sugar, and water.

The method for the production of wet-formed particleboards produced based on an ecological binder according to the invention is based on the fact that pine chips, with the fragmentation structure known in prior art - fractional composition and dimensional structure, are dried to a moisture content prior glue application of no more than 3.5%, most preferably to a moisture content from 1% - 2%. The developed adhesive mixture is applied to the prepared in this way chips in the amount from 18% to 25%, wherein the most preferable bonding ratio being 20% - 22%, i.e. dry matter of glue to dry matter of wooden chips. The adhesive mixture is prepared in such a manner that from 20 to 40% w/w, preferably 30% w/w of wheat or rye flour, from 7 to 13% w/w, preferably 10% grams of sugar, from 1 to 10%, preferably 5% of apple cider vinegar are added to from 50 - 70% w/w (in relation to the volume of the adhesive mixture) of water, preferably 60% of water, and mixed thoroughly for approximately 3 minutes after which the adhesive mixture is subjected to the process of homogenization until a homogeneous mixture is obtained. This process results in an adhesive solution with a dry matter content of approximately 40%.

The prepared adhesive mixture is consumed (applied to the chips) within no more than 15 - 20 minutes after the process of homogenization has been completed. A mat intended for pressing is formed from such (glue-coated) prepared chips.

As a result of the glue application, the moisture content of the mat can be closer to or even exceed 30%, which influences pressing time. The boards are produced at a density of 700 kg/m³ - 900 kg/m³, most preferably at a density of 780 kg/m³ - 830 kg/m³. The period from the application of the glue to the start of mat pressing does not exceed 60 minutes.

The boards are produced either as single-layer boards with the use of chips intended for the middle layer of the boards or as three-layer boards. In the case of three-layer boards, the bonding ratio of both fractions (i.e. that intended for the middle layer and microchips intended for the outer layers) can be glued using the same bonding ratio.

The mat is pressed at a unit pressure allowing the desired board thickness to be achieved, i.e. 2.5 - 3.5 MPa, but preferably between 2.6 and 2.8 MPa. The temperature of the press hotplates is from 180°C to 240°C, but it is preferable for the temperature to be 200°C - 220°C. The pressing coefficient, i.e. a factor, is dependent on the moisture content level of the boards and is from 50 s/mm of thickness to 75 s/mm, but it is preferable for the pressing time to be closer to 60 s/mm. The pressing process, i.e. the temperatures and pressing times adopted, should ensure the achievement of the moisture content in the range 1% - 5%, but preferably 3% - 3.5%, at the moment of opening of the press shelves, in the pressed mat, i.e. already in the board. After a conditioning period, the produced boards are suitable for post-treatment - cutting and lamination. Board prepared for sale should be protected against an increase of their moisture content.

### Examples:

### General example

The method for the production of wet-formed particleboards produced based on an ecological binder according to the invention is based on the fact that pine chips, with the fragmentation structure known in prior art - fractional composition and dimensional structure, are dried to a moisture content prior glue application of from 1% - 2%. The developed adhesive mixture is applied to prepared in this way chips in the amount 20% - 22%, i.e. dry matter of glue to dry matter of wooden chips. The adhesive mixture is prepared in such a way that 30% w/w of wheat flour, 10% grams of sugar, 5% of apple cider vinegar are added to 60% w/w (in relation to the volume of the adhesive mixture) of water and mixed thoroughly for approximately 3 minutes, after which the adhesive mixture is subjected to the process of homogenization until a homogeneous mixture is obtained. This process results in an adhesive solution with a dry matter content of approximately 40%.

The prepared adhesive mixture is consumed (applied to the chips) within no more than 20 minutes after the process of homogenization has been completed. A mat intended for pressing is formed from such (glue-coated) prepared chips.

As a result of the glue application, the moisture content of the mat can be closer to or even exceed 30%, which influences pressing time. The boards are produced at a density of 780 kg/m³ - 830 kg/m³. The period from the application of the glue to the start of mat pressing does not exceed 60 minutes.

The boards are produced both as single-layer boards with the use of chips intended for the middle layer of the boards and as three-layer boards. In the case of three-layer boards, the bonding ratio of both fractions (i.e. that intended for the middle layer and microchips intended for the outer layers) can be glued using the same bonding ratio.

The mat is pressed at a unit pressure allowing the desired board thickness to be achieved, i.e. between 2.6 MPa and 2.8 MPa. The temperature of the press hotplates is 200°C - 220°C. The pressing coefficient, i.e. a factor, is dependent on the moisture content level of the boards and is from 50 to 60 s/mm. The pressing process, i.e. the temperatures and pressing times adopted, should ensure the achievement of the moisture content in the range 3% - 3.5% at the moment of opening of the press shelves, in the pressed mat, i.e. already in the board. After a conditioning period , the produced boards are suitable for post-treatment - cutting and preparation for sale or lamination.

### Example I - a single-layer board

Under semi-technical conditions, single-layer boards with an assumed density of 700 kg/m³ were produced. Industrial chips intended for the inner layer of particleboards were subjected to a drying process to achieve a moisture content closer to 1%. The moisture content of the chips before bonding was 2.15%. The glue prepared according to the procedure described above was applied to prepared in this way chips in the amount of 20% of the dry matter of glue (flour + sugar) to the dry matter of chips. A mat was formed from the bonded chips and was subjected to the process of pressing in a hydraulic press at a pressure of 2.7 MPa. The boards were produced using 15 mm thick spacing boards. The assumed pressing time was 60 s/mm of board thickness. The temperature of the press hotplates was 180 °C. Three control boards were produced from which samples were obtained for a static bending test *f*ₘ (according to PN-EN 310: 1994), a modulus of elasticity test Eₘ (according to PN-EN 310: 1994), a perpendicular tensile strength test ft (according to PN-EN 319:1999), moisture content MC and density tests ρ.

**Table 1. Test results obtained**

| Parameter | fₘ (MPa) | Em (MPa) | *f*ₜ (MPa) | MC (%) | ρ (kg/m³) |
|---|---|---|---|---|---|
| Mean | 20.1 | 4070 | 0.35 | 3.8 | 715 ± 15 |
| SD | 1.99 | 253 | 0.05 | 0.04 | - |
| Cov | 9.86 | 6.22 | 14.33 | 1.11 | - |

| | | | | | |
|---|---|---|---|---|---|
| SD - standard deviation, Cov - coefficient of variation (%) | | | | | |

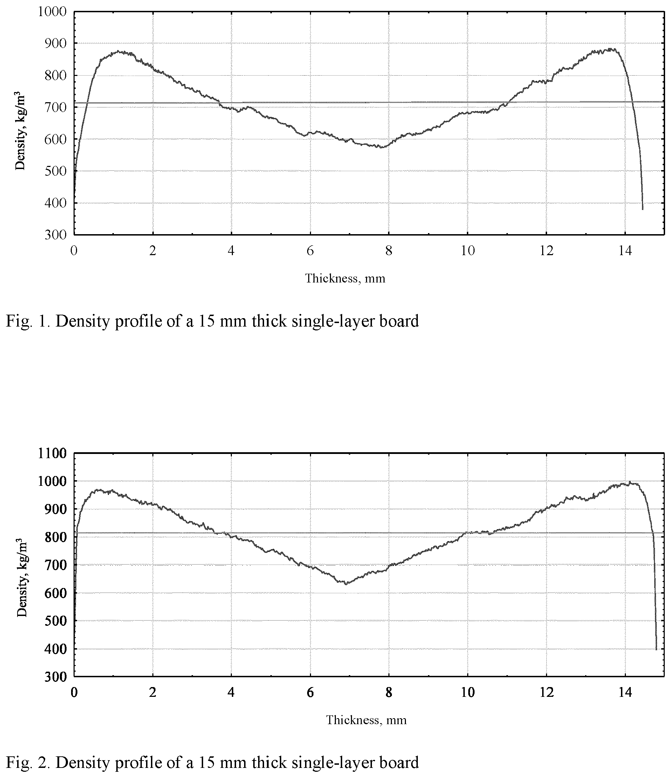

The test results obtained for the mechanical properties determined in the bending test are very high and far exceed the requirements for furniture boards. This is due to density distribution over the cross-section of the board (Fig. 1). The high initial moisture content causes the near-surface layers to compact much more than they do when the pressed material is drier. The resulting shape of the density profile is similar to that achieved in the case of three-layer boards, i.e. boards produced with outer layers made of microchips. The produced boards also have the assumed level of perpendicular tensile strength and moisture content after pressing.

### Example II - a single-layer board

Under semi-technical conditions, single-layer boards with an assumed density of 800 kg/m³ were produced. Industrial chips intended for the inner layer of particleboards were subjected to a drying process to achieve a moisture content closer to 1%. The moisture content of the chips before bonding was 2.83%. The glue prepared according to the procedure described above was applied to prepared in this way chips in the amount of 20% of the dry matter of glue (flour + sugar) to the dry matter of chips. A mat was formed from the bonded chips and was subjected to the process of pressing in a hydraulic press at a pressure of 3.0 MPa. The boards were produced using 15 mm thick spacing boards. The assumed pressing time coefficient was 55 s/mm of board thickness. The temperature of the press hotplates was 180 °C. Three control boards were produced from which samples were obtained for a static bending test *f*ₘ (according to PN-EN 310: 1994), a modulus of elasticity test Eₘ (according to PN-EN 310:1994), a perpendicular tensile strength test ft (according to PN-EN 319:1999), moisture content MC and density tests ρ.

**Table 2. Test results obtained**

| Parameter | fₘ (MPa) | Em (MPa) | *f*ₜ (MPa) | MC (%) | ρ (kg/m³) |
|---|---|---|---|---|---|
| Mean | 18.7 | 3780 | 0.39 | 4.95 | 805 |
| SD | 1.6 | 250 | 0.07 | 0.19 | 34.1 |
| Cov | 8.6 | 96.53 | 18.49 | 3.74 | 4.2 |

| | | | | | |
|---|---|---|---|---|---|
| SD - standard deviation, Cov - coefficient of variation (%) | | | | | |

Again, very high values were obtained for the mechanical properties determined in the bending test. Reducing the pressing time had a less positive effect on the final moisture content of the boards. This effect can be linked to a reduction in the average static bending strength as well as the modulus of elasticity despite an increase in the average density of the boards. Too high final moisture content can also contribute to the delamination or creation of air bubbles in the board. On the other hand, lower values for the modulus of elasticity and perhaps even the bending strength may be the result of changes in the section of the density profile (Fig. 2.). In this case, the maximum values decrease rapidly from the near-surface zones to the center of the board. The perpendicular tensile strength should be considered high, especially in the context of the density obtained in the middle zone of the boards.

### Example III- three-layer boards

Under semi-technical conditions, three-layer boards with an assumed density of 900 kg/m³ were produced. Industrial chips intended for the inner layer of particleboards were subjected to a drying process to achieve a moisture content closer to 1%. The moisture content of the chips before bonding was 2.83%. The industrial chips intended for the outer layer were not dried, their moisture content before bonding was approximately 5.5%. The glue prepared according to the procedure described above was applied to prepared in this way chips in the amount of 20% of the dry matter of glue to the dry matter of chips. A mat was formed from the bonded chips and was subjected to the process of pressing in a hydraulic press at a pressure of 3.0 MPa. The boards were produced using 18 mm thick spacing boards. The assumed pressing time coefficient was 65 s/mm of board thickness. Two board models were pressed, i.e. one with a hotplate temperature of 180°C and the other with a hotplate temperature of 200°C. Three control boards were produced from which samples were obtained for a static bending test *f*ₘ (according to PN-EN 310: 1994), a modulus of elasticity test Eₘ (according to PN-EN 310:1994), a perpendicular tensile strength test ft (according to PN-EN 319:1999), moisture content MC and density tests ρ.

**Table 3. Test results obtained**

| Parameter | fₘ (MPa) | Em (MPa) | *f*ₜ (MPa) | MC (%) | ρ (kg/m³) |
|---|---|---|---|---|---|
| Temperature of hotplates 180 °C | | | | | |
| Mean | 23.8 | 3820 | 0.33 | 5.58 | 850 |
| SD | 1.7 | 260 | 0.04 | 0.22 | 17.6 |
| Cov | 7.2 | 6.86 | 13.1 | 3.98 | 2.06 |

| Temperature of hotplates 200 °C | | | | | |
|---|---|---|---|---|---|
| Mean | 23.6 | 4660 | 0.34 | 5.18 | 890 |
| SD | 0.35 | 240 | 0.07 | 0.20 | 23.1 |
| Cov | 1.5 | 5.1 | 20.0 | 3.77 | 2.59 |

| Industrial plate | | | | | |
|---|---|---|---|---|---|
| Mean | 12.2 | 2550 | 0.39 | - | 650 |
| SD | 0.61 | 40.65 | 0.05 | - | 17.0 |
| Cov | 5.02 | 1.59 | 13.5 | - | 2.65 |

| | | | | | |
|---|---|---|---|---|---|
| SD - standard deviation, Cov - coefficient of variation (%) | | | | | |

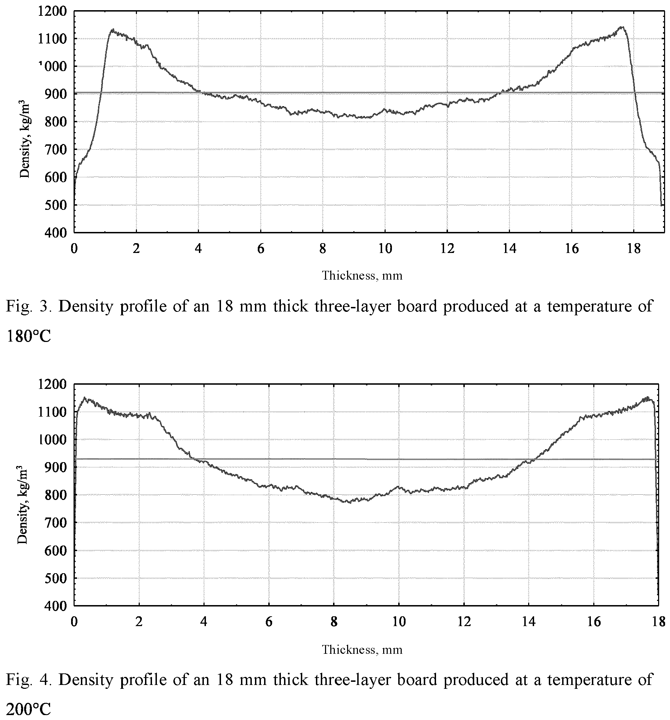

The particleboards produced in the laboratory have a static bending strength of more than 23 MPa, and this is irrespective of the pressing temperature of the mat. These boards also have a very high modulus of elasticity, and it is significantly higher in the case of boards pressed at a temperature of 200°C (Fig. 3 and Fig. 4). The rate of overheating of the mat, and thus the intensity of compaction, is much better for mats pressed at a temperature of 200°C. In this case, the outermost outer zones are clearly compacted, the quality of which is essentially responsible for the properties determined in the bending test. The produced boards have thus significantly higher properties specified in the bending test than industrial plates. Such high fₘ and Eₘ values of the produced boards allow, depending on the recipient's expectations, the density or perpendicular tensile strength to be adjusted at their expense.

## Claims

1. A method for the production of wet-formed particleboards produced based on an ecological binder from pine chips with a known fragmentation structure - fractional composition and dimensional structure, **characterised in that** the chips are subjected to drying to a moisture content prior glue application of no more than 3.5%, most preferably to a moisture content of from 1% - 2%, on the chips prepared in this way an adhesive mixture in the amount of from 18% to 25% is applied, wherein the most preferable is when the bonding ratio is 20% - 22%, i.e. the dry matter of glue to the dry matter of wooden chips, the adhesive mixture is prepared that from 20 to 40% w/w, preferably 30% w/w of wheat or rye flour, from 7 to 13% w/w, preferably 10% grams of sugar, from 1 to 10%, preferably 5% of apple cider vinegar are added to 50 - 70% w/w (in relation to the volume of the adhesive mixture) of water, preferably 60% of water, and mixed thoroughly for approximately 3 minutes, the adhesive mixture is subjected to the process of homogenization until a homogeneous mixture is obtained, and after the adhesive mixture has been applied to the chips, no later than 60 minutes after the adhesive mixture has been prepared, boards with a density 700 kg/m3 - 900 kg/m3, most preferably with a density 780 kg/m3 - 830 kg/m3 are produced so that the mat is pressed at a unit pressure from 2.5 - 3.5 MPa, but preferably between 2.6 MPa and 2.8 MPa, the temperature of the press hotplates is from 180°C to 240°C, but it is preferable for the temperature to be 200°C - 220°C, a pressing coefficient from 50 s/mm of thickness to 75 s/mm is maintained, but it is preferable for the pressing time to be closer to 60 s/mm, and the press pressure is maintained until a moisture content in the range 1% - 5%, but preferably from 3% - 3.5%, is achieved in the pressed mat at the moment of opening of the press shelves.

2. The method according to claim 1, **characterized in that** the boards are produced as single-layer ones with the use of chips intended for the middle layer of the boards or as three-layer boards.

3. The method according to claim 2, **characterized in that** for three-layer boards the bonding ratio of both fractions, i.e. that intended for the middle layer and microchips intended for the outer layers, is the same.

4. The method according to claim 1 or 2 or 3, **characterized in that** the prepared adhesive mixture is consumed (applied to the chips) within no more than 15 - 20 minutes after the process of homogenization has been completed.
